Europäisches Patentamt

European Patent Office

Office européen des brevets

(19)

(11) Veröffentlichungsnummer: **0 319 994**
**A2**

(12) **EUROPÄISCHE PATENTANMELDUNG**

(21) Anmeldenummer: **88120612.2**

(22) Anmeldetag: **09.12.88**

(51) Int. Cl.⁴: **B60T 7/08**

(30) Priorität: **11.12.87 DE 8716392 U**

(43) Veröffentlichungstag der Anmeldung:
**14.06.89 Patentblatt 89/24**

(84) Benannte Vertragsstaaten:
**DE ES FR GB IT**

(71) Anmelder: **AL-KO KOBER AG**
**Ichenhauser Strasse 14**
**D-8871 Kötz 2(DE)**

(72) Erfinder: **Kober, H. Kurt**
**Sandberg 2**
**D-8871 Kötz(DE)**

(74) Vertreter: **Ernicke, Hans-Dieter, Dipl.-Ing. et al**
**Schwibbogenplatz 2b**
**D-8900 Augsburg(DE)**

(54) **Handbremse für Radbremsen von Fahrzeuganhängern.**

(57) Die Erfindung befaßt sich mit der besonderen
Ausbildung eines Handbremshebels (1) für die Betätigung der Radbremsen von Fahrzeuganhängern.
Um größere Spannwege ohne Veränderung der Dimensionen des Handbremshebels (1) und ohne größeren manuellen Krafteinsatz zu erreichen, ist der
Handbremshebel (1) einerseits mit einer über eine
Totpunktstellung gehenden Gasfeder (3) sowie mit
einer auf einen Bowdenzug (5) des Bremsgestänges
(6) einwirkenden Kufe (7) versehen. Die Kufe (7)
sowie der Anlenkpunkt (8) des Bowdenzuges (5) am
Handbremshebel (1) sind nun so angeordnet, daß sie
sich in der Grundstellung diesseits einer durch die
Schwenkachse (4) des Handbremshebels gehenden
Vertikalebene (9), etwa in der 1-Uhr-Position, und in
der Bremsendstellung jenseits dieser Ebene (9),
etwa in der 9-Uhr-Position, befinden. im letzten
Schwenkbereich des Handbremshebels (1) trifft die
Kufe (7) gegen den Bowdenzug (5) und bestimmt so
den Spannweg, während die Gasfeder (3) ihre volle
Unterstützungskraft auf den Handbremshebel (1)
ausübt.

Fig 2

# Handbremse für Radbremsen von Fahrzeuganhängern

Die Erfindung bezieht sich auf eine Handbremse für Radbremsen von Fahrzeuganhängern, bestehend aus einem schwenkbar gelagerten, von einer daran angelenkten Gasfeder unterstützten Handbremshebel und aus einem am Handbremshebel angelenkten und mit einem Bremsgestänge verbundenen Bowdenzug.

Derartige Handbremseinrichtungen, bei denen die Gasfedern zur Unterstützung der Handkraft in Anwendung kommen, sind aus der DE-C 30 33 582 bekannt. Andere Handbremshebel entsprechend der DE-B 12 84 310 weisen Kufen mit gekrümmten Auflageflächen auf, die während der Schwenkbewegung des Handbremshebels auf den Bowdenzug treffen und damit den vorher wirksamen Hebelarm ersetzen. Mit solchen Einrichtungen wird das Ziel verfolgt, den ersten Teil des Spannweges mit geringer Kraft und großem Weg zurückzulegen und im letzten Teil des Spannweges durch günstige Hebelarmverhältnisse eine vergrößerte Spannkraft zu entwickeln, wie dies im DE-GM 18 31 498 beschrieben ist.

Probleme entstehen dann, wenn größere Spannwege ohne Veränderung der Dimensionen des Handbremshebels erreicht werden sollen. Solche Probleme gibt es beispielsweise bei Anhängerbremsen mit Rückfahrautomatik. Hier weichen die Bremsbacken im Rahmen des Zuspannweges der Auflaufeinrichtung bei Rückwärtsfahrt aus. Um die Bremsbacken bei Rückwärtsfahrt oder bei danach zum Halt gebrachten Anhängern mit der Handbremseinrichtung überhaupt in Anlage mit der Bremstrommel bringen zu können, muß daher ein wesentlich größerer Spannweg zurückgelegt werden, als bei normalen Radbremsen. Bei manchen Bremsenkonstruktionen muß auch ein zwischengeschalteter Federspeicher gespannt werden. In solchen Fällen hat man Handbremsen mit größeren Dimensionen oder mit einem wesentlich vergrößerten Schwenkwinkel am Handbremshebel eingesetzt.

Es ist daher Aufgabe der vorliegenden Erfindung, eine Handbremseinrichtung mit größerer Wirksamkeit und Betriebssicherheit aufzuzeigen, welche die vorstehend genannten Probleme zu lösen vermag.

Die Erfindung löst diese Aufgabe mit den Merkmalen des Hauptanspruches.

Die erfindungsgemäße Zuordnung des Anlenkpunktes für den Bowdenzug und die Kufe, bezogen auf eine definierte Ebene, hat zur Folge, daß der Bowdenzug in der Grundstellung des Handbremshebels sich frei erstreckt und sogar schlaff durchhängen kann. Im ersten Teil der Schwenkbewegung des Bremshebels legt der Anlenkpunkt für den Bowdenzug einen optimalen Weg zurück, wobei der Bowdenzug gestrafft, das Spiel der gesamten Bremseinrichtung beseitigt und die Bremsbacken der Radbremsen zur Anlage gebracht werden.

Während es bei den eingangs genannten vorbekannten Bremseinrichtungen nur darauf ankommt, bei geringer werdendem Spannweg des Handbremshebels eine vergrößerte Zugkraft zu installieren, vermag der Gegenstand der Erfindung den an der Radbremse benötigten zusätzlichen Spannweg, z.B. wegen der erwähnten Rückfahrautomatik, mühelos zu überwinden. Dies geschieht dadurch, daß zufolge des Auftreffens der Kufe auf den Bowdenzug und der Auslenkung des Bowdenzuges aus seiner direkten Spannlinie der kleiner werdende Hebelarm zwischen dem Anlenkpunkt und der Schwenkachse des Handbremshebels ersetzt wird durch den radialen Abstand der Auflagefläche der Kufe von der Schwenkachse. Die mit dieser Vergrößerung des Hebelarmes bedingte Vergrößerung der Handkraft am Radbremshebel wird durch die nun mit vollem Wirkungsgrad einsetzende Kraft der Gasfeder kompensiert.

Mit dieser erfindungsgemäßen Konzeption ist es möglich geworden, eine solche Kraft in die Radbremse einzuleiten, daß eine gleichbleibende Abbremsung bei den verschiedenen Fahrzuständen, also auch bei Rückwärtsfahrt oder bei Stillstand nach Rückwärtsfahrt im Falle der Anwendung einer Rückfahrautomatik erzeugt wird.

Deshalb ist es auch möglich, die Dimensionen der erfindungsgemäßen Radbremse so zu verändern, daß man sich den wechselnden Anforderungen unterschiedlicher Radbremsen anpassen kann.

Zu diesem Zweck kann man im Sinne der Unteransprüche die Stelle des Anlenkpunktes des Bowdenzuges am Handbremshebel, die Krümmung der Auflagefläche der Kufe sowie deren Lage verändern, wobei allerdings einzelne Merkmale der Kufenausbildung durch das DE-GM 19 43 748 bekannt sind.

Der Bremszug ist biegeelastisch ausgebildet und legt sich über den Schwenkweg des Handbremshebels zunehmend auf die Auflagefläche der Kufe. Damit ist ein größerer Spannweg realisierbar als bei vorbekannten Handbremseinrichtungen.

Der Spannweg läßt sich bei der erfindungsgemäßen Handbremseinrichtung mit der Form der Krümmung der Auflagefläche und ihrem Abstand zur Schwenkachse des Handbremshebels variieren. Je größer der Bogenradius ist, desto größer ist der Gewinn an Spannweg. Desgleichen muß auch die Krümmung der Auflagefläche nicht konstant sein, sondern kann sich beliebig ändern. Wird beispielsweise die Krümmung vom Anlenkpunkt des Bremszuges ausgehend zunehmend flacher, wird über den Schwenkweg des Handbremshebels die wirksame Bogenhöhe und damit der Gewinn an Spannweg immer größer.

Vorteilhaft ist auch der Umstand, daß der Bremszug über den gesamten Schwenkweg mit gleichbleibendem Winkel am Handbremshebel angreift und damit kein Gelenk mehr nötig ist.

Die erfindungsgemäße Handbremseinrichtung läßt sich mit besonderem Vorteil für Anhängerbremsen mit Rückfahrautomatik einsetzen, aber auch für andere Fahrzeugbremsen.

In einem Ausführungsbeispiel der Erfindung besitzt die Auflagefläche der Kufe die Form eines Kreisbogens, der nahe des Anlenkpunktes des Bremszuges angeordnet und dabei so dimensioniert ist, daß sein Mittelpunkt mit der Schwenkachse des Handbremshebels zusammenfällt. Hierdurch ergibt sich über einen beachtlichen Schwenkweg des Handbremshebels eine konstante Kraft und Wegübersetzung. Dies gestattet eine feinfühlige Dosierung der Bremskraft und damit auch eine gleichmäßige Bremswirkung. Durch die erfindungsgemäße Anordnung wird außerdem die Hebellösekraft kleiner, da die Federrückstellkräfte der Radbremsen über den Bogenradius am Hebel angreifen.

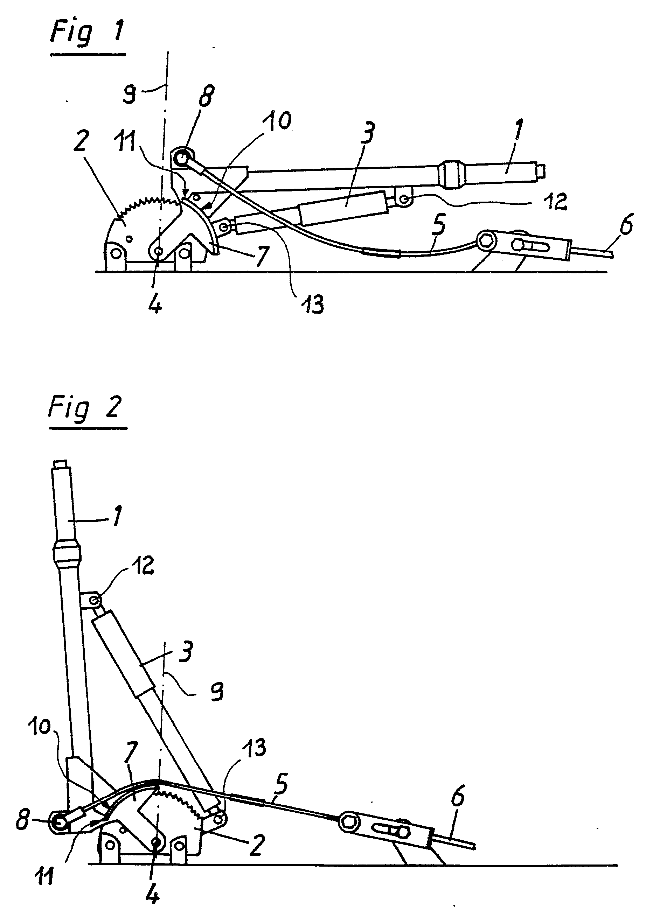

Die Erfindung ist in der Zeichnung beispielsweise und schematisch dargestellt. Es zeigen:

Fig. (1): eine Handbremseinrichtung in ihrer Grundstellung und

Fig. (2): die gleiche Handbremseinrichtung in ihrer Bremsendstellung.

Die Handbremseinrichtung nach dem Ausführungsbeispiel besteht aus einem schwenkbar um eine Schwenkachse (4) gelagerten Handbremshebel (1), der in üblicher Weise über ein Klinkengesperre mit einem Rastersegment (2) im Eingriff steht. Am Handbremshebel (1) ist eine Gasfeder (3) zur Unterstützung der Handkraft so angelenkt, daß sie an einer wählbaren Stelle des Schwenkweges eine Totpunktstellung überschreitet. Hierdurch hält sie den Handbremshebel (1) in seiner Grundstellung gemäß Fig. (1) in Sperrstellung, während sie nach Überschreiten der Totpunktstellung gemäß Fig. (2) die Handkraft unterstützt.

Am Handbremshebel (1) ist bei (8) ein Bremszug (5) (z.B. Bowdenzug) angelenkt, der im gezeigten Ausführungsbeispiel aus einem biegeelastischen Seilstück (5) besteht, das über einen Kulissenanschluß mit einem Bremsgestänge (6) verbunden ist. Das Bremsgestänge (6) führt zu den Radbremsen eines Anhängers, die als Rückfahrautomatikbremsen ausgebildet sind. Im Verlauf des Bremszugs (5) kann auch noch ein Federspeicher, ein Bremskraftverteiler oder dergleichen anderes Zusatzorgan angeordnet sein. In Variation zum gezeigten Ausführungsbeispiel kann der Bremszug (5) auch durchgehend aus einem Seil oder auch einem Bowdenzug bestehen.

In der Grundstellung gemäß Fig. (1) weist der Handbremshebel (1) in die gleiche Richtung wie der Bremszug (5), was die umgekehrte Anordnung nicht ausschließt. Dann ist der Anlenkpunkt (8) unterhalb der Schwenkachse (4) vorzusehen.

Der Anlenkpunkt (8) des Bremszuges (5) am Handbremshebel sowie die Auflagefläche (10) der Kufe (7) befinden sich in der Grundstellung der Handbremse gemäß Fig. (1) auf der einen Seite einer (gedachten) Ebene (9), die durch die Schwenkachse (4) und annähernd senkrecht zur Wirkungslinie des Bremszuges (5) bzw. des Bremsgestänges (6) liegt. Diese Stellung kann man als 1-Uhr-Stellung (oder in spiegelbildlicher Betrachtung), bezogen auf die Schwenkachse (4) und die Ebene (9) bezeichnen.

In der Schwenkendstellung gemäß Fig. (2) befindet sich der Anlenkpunkt (8) in einer Lage kurz vor der 9-Uhr-Stellung (oder in spiegelbildlicher Betrachtung).

Daraus ersieht man, daß im esten Teil des Schwenkweges des Handbremshebels (1) der Bremszug gestrafft und das Spiel der Bremseinrichtung bis zur Anlage der Bremsbacken bei optimalem Weg des Anlenkpunktes (8) beseitigt werden. IM folgenden Teil des Schwenkweges des Handbremshebels (1) kommt der Bremszug (5) zur Anlage an der Auflagefläche (10) der Kufe (7) und wird aus seiner ursprünglich geraden Lage ausgelenkt. Damit wird der radiale Abstand der Auflagefläche (10) von der Schwenkachse (4) wirksam und kompensiert den kleiner werdenden Spannweg des Anlenkpunktes (8).

Im letzten Teil des Schwenkweges des Handbremshebels (1) befinden sich der Anlenkpunkt (8) und die kufe (7) auf der anderen Seite der Ebene (9). Der am Handbremshebel (1) größer werdende Kraftbedarf wird durch die Wirkung der Gasfeder (3) kompensiert, deren Anlenkachsen (12,13) so gewählt sind, daß ein Totpunkt auf dem Weg von der Grundstellung gemäß Fig. (1) zur Bremsendstellung gemäß Fig. (2) überschritten wird.

Die im Ausführungsbeispiel gezeigte Handbremse vermag daher einen größeren Spannweg als eine vorbekannte Handbremse mit gleichen Dimensionen zu erzeugen.

Zur Vermeidung von Torsionsmomenten kann die kufe (7) aus zwei Schalen bestehen, die deckungsgleich zu beiden Seiten des Handbremshebels (1) angeordnet sind und das Rastersegment (2) sowie die Gasfeder (3) gabelförmig umgreifen. Dementsprechend können auch der Bremszug bzw. das Seilstück (5) zwei Stränge haben, die mit der jeweiligen Schale zusammenwirken.

3

Wenn keine Gasfeder (3) vorhanden ist, kann die Kufe (7) auch einteilig ausgebildet und zentrisch im gegabelten Schaft des Handbremshebels (1) angeordnet sein. In diesem Fall genügt ein einzelner Bremszug (5).

Im gezeigten Ausführungsbeispiel besitzt die Auflagefläche (10) der Kufe (7) eine kreisförmige Krümmung, die in der Nähe des Anlenkpunktes (8) anschließt und deren Zentrum mit der Schwenkachse (4) des Handbremshebels (1) zusammenfällt. Der Bremszug (5) greift hierbei über den Schwenkweg mit gleichem Abstand und gleicher tangentialer Richtung am Handbremshebel (1) an, so daß die Hebelverhältnisse und die Kraftübersetzung konstant bleiben. Es ergibt sich auch eine gleichmäßige Wegübersetzung zwischen dem Spannweg des Bremszugs (5) und dem Schwenkweg des Handbremshebels (1).

Durch Änderung der Krümmung der Auflagefläche (10) der Kufe (7) und durch Verlegung der Lage des Anlenkpunktes (8) oder/und der Kufe (7) lassen sich Anpassungen der Handbremseinrichtung an die vershiedenen Anforderungen der Radbremsen erreichen.

## STÜCKLISTE

(1) Handbremshebel
(2) Rastersegment
(3) Gasfeder
(4) Schwenkachse
(5) Bremszug, Seilstück
(6) Bremsgestänge
(7) Anlagesegment
(8) Anlenkpunkt
(9) Ebene
(10) Auflagefläche
(11) Beginn der Auflagefläche
(12) Anlenkachse
(13) Anlenkachse

## Ansprüche

(1) Handbremse für Radbremsen von Fahrzeuganhängern, bestehend aus einem schwenkbar gelagerten, von einer daran angelenkten Gasfeder (3) unterstützten Handbremshebel(1) und aus einem am Handbremshebel (1) angelenkten und mit einem Bremsgestänge (6) verbundenen Bowdenzug (5) sowie einer am Handbremshebel (1) angeordneten, bei dessen Verschwenken auf den Bowdenzug (5) einwirkenden und mit einer gekrümmten Auflagefläche (10) versehenen Kufe (7), wobei zur Vergrößerung des Spannweges des Bowdenzuges (5) dessen Anlenkpunkt (8) am Handbremshebel (1) und die Kufe (7) in der Weise angeordnet sind, daß sie sich in der Grundstellung des Handbremshebels (1) auf der einen Seite einer durch die Schwenkachse (4) und etwa senkrecht zum Bremsgestänge (6) bzw. Bowdenzug (5) gehenden Ebene (9) und in der Bremsendstellung auf der anderen Seite dieser Ebene (9) befinden, und wobei die Auflagefläche (10) der Kufe (7) einen größeren radialen Abstand zur Schwenkachse (4) als die gedachte direkte Verbindungslinie zwischen dem Anlenkpunkt (8) und dem Bremsgestänge (6) in der Bremsendstellung aufweist.

(2) Handbremse nach Anspruch (1), dadurch **gekennzeichnet**, daß der Anlenkpunkt (8) in der Grundstellung des Handbremshebels (1) etwa in der 1-Uhr-Position und in der Bremsendstellung etwa kurz vor der 9-Uhr-Position oder in einer spiegelbildlichen Position, bezogen auf die Schwenkachse (4) bzw. die Ebene (9), sich befindet.

(3) Handbremse nach Anspruch (1) oder (2), dadurch **gekennzeichnet**, daß die Auflagefläche (10) der Kufe (7) kreisbogenförmig ausgebildet ist.

(4) Handbremse nach Anspruch (1) oder (2), dadurch **gekennzeichnet**, daß die Auflagefläche (10) der Kufe (7) eine vom Kreisbogen abweichende Krümmung aufweist.

(5) Handbremse nach Anspruch (1) oder einem der folgenden, dadurch **gekennzeichnet**, daß die Auflagefläche (10) der Kufe (7) im Raum zwischen der Schwenkachse (4) und dem Anlenkpunkt (8) liegt und der Beginn der Auflagefläche (10) sich nahe der Verbindungslinie zwischen dem Anlenkpunkt (8) und der Schwenkachse (4) befindet.

(6) Handbremse nach Anspruch (1) oder einem der folgenden, dadurch **gekennzeichnet**, daß die Anlenkachsen (12,13) der Gasfeder (3) am Handbremshebel (1) so gewählt sind, daß die volle Unterstützungskraft der Gasfeder (3) in der Stellung wirkt, in welcher der Bowdenzug (5) durch die Auflagefläche (10) der Kufe (7) ausgelenkt ist.

## Fig 1

## Fig 2

AL-KO Kober AG
330-541 gl